Europäisches Patentamt

European Patent Office

Office européen des brevets

(19)

(11) **EP 1 418 545 A2**

(12) **EUROPEAN PATENT APPLICATION**

(43) Date of publication:
**12.05.2004 Bulletin 2004/20**

(51) Int Cl.7: **G06T 7/00**

(21) Application number: **03078298.1**

(22) Date of filing: **20.10.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **31.10.2002 US 284956**

(71) Applicant: **EASTMAN KODAK COMPANY**
**Rochester, New York 14650 (US)**

(72) Inventor: **Sun, Zhaohui,**
**c/o Eastman Kodak Company**
**Rochester, New York 14650-2201 (US)**

(74) Representative: **Haile, Helen Cynthia et al**
**Kodak Limited**
**Patent, W92-3A,**
**Headstone Drive**
**Harrow, Middlesex HA1 4TY (GB)**

(54) **Method for error analysis of trifocal transfer**

(57)    A technique is described of predicting the uncertainty of trifocal transfer. The technique is an improvement upon a method for determining the perspective projection of a spatial point in three image frames, given the geometric constraint of trilinearity as defined by a set of trilinear equations, where trifocal transfer is used to predict a corresponding point in the third frame from a trifocal tensor and points in the first two frames. The improvement comprises the step of predicting the uncertainty of trifocal transfer in the third image subject to the uncertainties affecting corresponding points in the first two images of a rigid scene under perspective projection using the trifocal tensor.

FIG. 3

EP 1 418 545 A2

**Description**

The invention relates generally to the field of visual computing, and in particular to the error sensitivity issues related to trifocal transfer.

The geometric constraint of trilinearity across three images of a rigid scene under perspective projection has been revealed recently. A trifocal model uses three frames simultaneously, instead of two as in stereo, and is inherently more robust.

Trifocal transfer employs the trilinearity constraint to find the corresponding point/line in the third image frame from the correspondence in the first two frames. "Trifocal" means three cameras, and the three images under perspective projection that are involved, and "transfer" refers to the reprojection of points in the previous frames to the current frame. More specifically, given a point (x,y) in the first image $\psi$, its correspondence (x',y') in the second image $\psi'$, and a trifocal tensor $T$ ($T_i^{jk}$ and i,j,k=1,2,3) across three images, trifocal transfer finds the corresponding point (x", y") in the third image $\psi"$ by a function mapping (x",y") = f(x,y,x',y',T). The trifocal tensor **T** is a set of 27 coefficients governing the parameters and the motion of the three cameras, which can be written as a 3x3x3 matrix.

The capability of trifocal transfer to predict the location of the entities (such as points and lines) not seen in a new image frame from the ones already seen in the other frames makes it an attractive tool for a wide variety of applications, such as image-based rendering, virtual navigation, motion estimation and compensation, and video compression and manipulation. For example, in image-based rendering, a collection of 2-D images is used to model a 3-D scene without explicit 3-D reconstruction. The image under a new viewing condition (view point, field of view, lighting, etc.) can be warped from the images already stored in a database; trifocal transfer is an attractive tool for this task, as it accounts for unconstrained camera motion under perspective projections. Similarly, in virtual navigation, a virtual view of a rigid scene can actually be predicted from those already seen and captured. It has great potential in applications such as virtual reality, video gaming, tele-education, and virtual museum. In motion estimation and compensation, trifocal transfer has the potential of leading to less motion compensation residue and increased coding efficiency, which has direct application in video compression and manipulation.

The representation of a 3-D object using the trifocal tensor has been disclosed in a variety of patents: (1) U. S. Patent No. 5,821,943, "Apparatus and method for recreating and manipulating a 3D object based on a 2D projection thereof" to Amnon Shashua, discloses a method to generate information regarding a 3D object from at least one 2D projection of the 3D object by the use of a trifocal tensor. (2) U.S. Patent No. 6,219,444, "Synthesizing virtual two dimensional images of three dimensional space from a collection of real two dimensional images" to Amnon Shashua and Shai Avidan, discloses a method to generate a virtual image of a 3D object from trifocal tensor and the correspondence in the first two images. (3) U.S. Patent No. 6,198,852, "View synthesis from plural images using a trifocal tensor data structure in a multi-view parallax geometry" to P. Anandan, M. Irani, and D. Weinshall, discloses a method for a similar task of virtual view generation by the use of plane-plus-parallax and trifocal tensor data structure. (4) U.S. Patent No. 5,745,668, "Example-based image analysis and synthesis using pixelwise correspondence" to Tomaso Poggio, David Beymer and Amnon Shashua, discloses an image based analysis and synthesis approach to generate a virtual view of an object by computing a parameter set and determining the pixelwise dense optical flow, although the trifocal tensor is not explicitly mentioned as the set of parameters to be used. Meanwhile, studies on the use of trifocal representation were also published in scientific and engineering journals. In particular, the trilinear equations first appeared in "Algebraic functions for recognition" by A. Shashua, *IEEE Transactions on Pattern Analysis and Machine Intelligence,* vol. 17, pp.779-789, 1995. The notion of trifocal tensor and other geometric relations across three images were presented in "Lines and points in three views and the trifocal tensor" by R. I. Hartley, *International Journal on Computer Vision,* vol. 22, pp. 125-140, 1997. And more comprehensive materials on this subject can be found in a book, <u>Multiple view geometry in computer vision,</u> by R. Harley and A. Zisserman, Cambridge University Press, 2001. The application of the trifocal model in motion estimation and compensation, and video compression and manipulation was studied in "Trifocal motion modeling for object-based video compression and manipulation" by Z. Sun and A. M. Tekalp, *IEEE Trans. On Circuits and Systems for Video Technology,* vol.8, pp. 667-685, 1998.

Although the solution of the function mapping of (x",y") = f(x,y,x',y',T) is well understood, the error sensitivity issues have not been thoroughly investigated. In fact, it has become one of the obstacles for the widespread use of trifocal transfer in engineering. In practice, both point correspondence and the trifocal tensor are almost always associated with certain kind of noise. Points (x,y) and (x',y') are located based on the pixel intensity/color around their neighborhood *(e.g.* through a comer detector). The precision of (x',y') also depends on the involved matching or motion tracking scheme. The trifocal tensor T is usually estimated from point correspondences and is subject to input noise as well. Therefore it is of great interest to investigate the best achievable performance with respect to the input noise level and the impact of the input perturbation on the parameters to be estimated.

Error analysis for general error sensitivity issues and specific vision problems has been studied before, and there are quite a few references available. For example, a general framework of error propagation was presented in "Covariance propagation in computer vision" by R. M. Haralick, *International Journal of Pattern Recognition and Arti-*

*ficial Intelligence,* vol. 10, No. 5, pp.561-572, 1996. A first order approximation approach for structure from motion from two perspective views was studied in "Motion and structure from two perspective views: Algorithms, error analysis and error estimation" by J. Weng, T. Huang, and N. Ahuja, *IEEE Trans. on Pattern Analysis Machine Intelligence,* vol. 11, pp.451-476, May 1989. And a similar approach was taken for the factorization method in "Error characterization of the factorization method" by Z. Sun, V. Ramesh and A. M. Tekalp, Academic Press Journal *Computer Vision and Image Understanding,* vo1.82, pp.110-137, May 2001. Furthermore, in U.S. Patent No. 5,661,696, "Methods and apparatus for determining error in formation parameter determinations" to C. K. Kimball and D. J. Scheibner, a method is disclosed for determining the error in earth formations via sonic well logging technique. However, none of the prior art is specific to the method of trifocal transfer.

In practical engineering applications, the error sensitivity issues associated with trifocal transfer are as important as the algorithm itself. The quantitative error measures help to pinpoint the performance of a specific scene and camera configuration and answer such questions as: What is the transfer uncertainty in (x", y") for the given input noise level? Which part of the scene suffers more perturbation than the other parts and what else can be done to improve the performance? If the uncertainty on point correspondence and the trifocal tensor are fixed, how should we arrange the cameras in space such that the overall transfer uncertainty is minimized on the frame $\Psi$"? Is the precision of trifocal transfer sufficient for a given application? If not, what are the possible approaches to improve it? To achieve transfer uncertainty under a certain level, how apart (baselines between cameras) should the cameras be placed? What is the minimal number of images to taken around an object such that transfer uncertainty falls below a certain specified level? To answer these questions quantitatively, there is an obvious need for, and it would be highly advantageous to have, a systematic method for error analysis of trifocal transfer.

It is an object of the invention to derive the first order covariance propagation for trifocal transfer and use the covariance as a vehicle to quantitatively measure the uncertainty.

It is another object of the invention to derive the Cramer-Rao performance bound for trifocal transfer to infer the best achievable performance at a certain input noise level.

It is another object of the invention to use the error analysis results to pinpoint the performances of each single point and the whole object.

It is yet another object of the invention to use the error analysis results to arrange cameras such that the uncertainty of trifocal transfer is minimized.

The present invention is directed to overcoming one or more of the problems set forth above. Briefly summarized, according to one aspect of the present invention, the invention resides in a technique of predicting the uncertainty of trifocal transfer. The technique is an improvement to a method for determining the perspective projection of a spatial point in three image frames, given the geometric constraint of trilinearity as defined by a set of trilinear equations, where trifocal transfer is used to predict a corresponding point in the third frame from a trifocal tensor and points in the first two frames. The improvement comprises the step of predicting the uncertainty of trifocal transfer in the third image subject to the uncertainties on corresponding points in the first two images of a rigid scene under perspective projection using the trifocal tensor.

The needs are met in this invention by the investigation of the error sensitivity issues associated with trifocal transfer, *i.e.* how the uncertainty of point correspondence in the first two frames and the trifocal tensor affects the corresponding point in the third frame. The error analysis results are used for camera planning, system performance evaluation and trifocal transfer on real imagery. Closed-form analysis is presented for the first order covariance propagation as well as the Cramer-Rao performance bound. The quantitative analysis can lead to better understanding of the system performance in engineering applications.

The advantages of the disclosed invention include: (1) predicting the perturbation on a point in the third frame (x",y") given the perturbation on its corresponding points in the first two frames (x,y,x',y') and the trifocal tensor; (2) predicting the covariance of a point in the third frame given the covariances of its corresponding points in the first two frames and the trifocal tensor; (3) predicting the best achievable performance to transfer a point in the third frame at a given noise level; (4) deriving quantitative measures from error analysis to pinpoint the performance at each single point and the whole object; and (5) using the analysis result to assist camera planning such that uncertainty of trifocal transfer is minimal on the third frame.

These and other aspects, objects, features and advantages of the present invention will be more clearly understood and appreciated from a review of the following detailed description of the preferred embodiments and appended claims, and by reference to the accompanying drawings.

Fig. 1 is a perspective diagram of a computer system for implementing the present invention.

Fig. 2 is a diagram showing how point p" and its uncertainty in frame $\psi$" can be predicted from trifocal tensor ***T*** and point correspondence p and p' in frames $\psi$ and $\psi$'.

Fig. 3 outlines the procedure for covariance propagation for trifocal transfer.

Fig. 4 illustrates the procedure for Cramer-Rao performance bound for trifocal transfer.

Fig. 5 shows camera planning for minimal uncertainty of trifocal transfer.
Fig. 6 shows a 3-D plane model in VRML.
Fig. 7 shows the uncertainty of trifocal transfer as a function of angle θ in a YZ plane.
Fig. 8 shows the uncertainty of trifocal transfer as a function of the baseline between cameras C1 and C2.
Fig. 9 shows the uncertainty of trifocal transfer as a function of angle θ in XY plane.
Figs. 10A - 10C show projections of a 3-D plane model in the third frame and the associated uncertainty of 12 selected nodes in (c) that can be predicted by those in the first two frames in (a) and (b).
Figs. 11A - 11 C illustrate trifocal transfer and associated uncertainty on real imagery.

In the following description, a preferred embodiment of the present invention will be described in terms that would ordinarily be implemented as a software program. Those skilled in the art will readily recognize that the equivalent of such software may also be constructed in hardware. Because image manipulation algorithms and systems are well known, the present description will be directed in particular to algorithms and systems forming part of, or cooperating more directly with, the system and method in accordance with the present invention. Other aspects of such algorithms and systems, and hardware and/or software for producing and otherwise processing the image signals involved therewith, not specifically shown or described herein, may be selected from such systems, algorithms, components and elements known in the art. Given the system as described according to the invention in the following materials, software not specifically shown, suggested or described herein that is useful for implementation of the invention is conventional and within the ordinary skill in such arts.

Still further, as used herein, the computer program may be stored in a computer readable storage medium, which may comprise, for example; magnetic storage media such as a magnetic disk (such as a hard drive or a floppy disk) or magnetic tape; optical storage media such as an optical disc, optical tape, or machine readable bar code; solid state electronic storage devices such as random access memory (RAM), or read only memory (ROM); or any other physical device or medium employed to store a computer program.

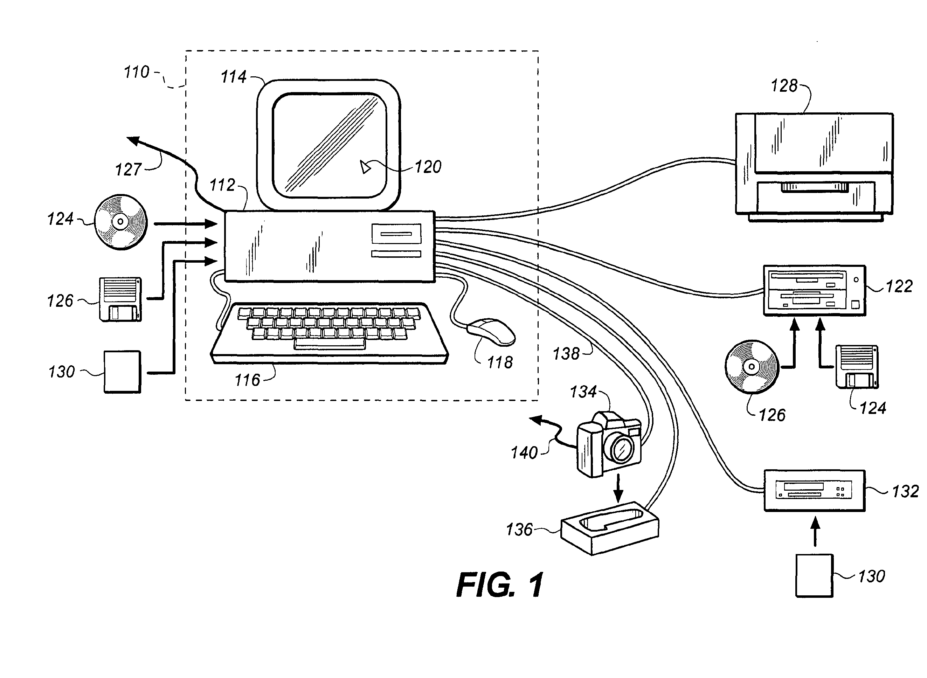

Referring to Fig. 1, there is illustrated a computer system 110 for implementing the present invention. Although the computer system 110 is shown for the purpose of illustrating a preferred embodiment, the present invention is not limited to the computer system 110 shown, but may be used on any electronic processing system such as found in home computers, kiosks, retail or wholesale photofinishing, or any other system for the processing of digital images. The computer system 110 includes a microprocessor-based unit 112 for receiving and processing software programs and for performing other processing functions. A display 114 is electrically connected to the microprocessor-based unit 112 for displaying user-related information associated with the software, e.g., by means of a graphical user interface. A keyboard 116 is also connected to the microprocessor based unit 112 for permitting a user to input information to the software. As an alternative to using the keyboard 116 for input, a mouse 118 may be used for moving a selector 120 on the display 114 and for selecting an item on which the selector 120 overlays, as is well known in the art.

A compact disk-read only memory (CD-ROM) 124, which typically includes software programs, is inserted into the microprocessor based unit for providing a means of inputting the software programs and other information to the microprocessor based unit 112. In addition, a floppy disk 126 may also include a software program, and is inserted into the microprocessor-based unit 112 for inputting the software program. The compact disk-read only memory (CD-ROM) 124 or the floppy disk 126 may alternatively be inserted into externally located disk drive unit 122 which is connected to the microprocessor-based unit 112. Still further, the microprocessor-based unit 112 may be programmed, as is well known in the art, for storing the software program internally. The microprocessor-based unit 112 may also have a network connection 127, such as a telephone line, to an external network, such as a local area network or the Internet. A printer 128 may also be connected to the microprocessor-based unit 112 for printing a hardcopy of the output from the computer system 110.

Images may also be displayed on the display 114 via a personal computer card (PC card) 130, such as, as it was formerly known, a PCMCIA card (based on the specifications of the Personal Computer Memory Card International Association) which contains digitized images electronically embodied in the card 130. The PC card 130 is ultimately inserted into the microprocessor based unit 112 for permitting visual display of the image on the display 114. Alternatively, the PC card 130 can be inserted into an externally located PC card reader 132 connected to the microprocessor-based unit 112. Images may also be input via the compact disk 124, the floppy disk 126, or the network connection 127. Any images stored in the PC card 130, the floppy disk 126 or the compact disk 124, or input through the network connection 127, may have been obtained from a variety of sources, such as a digital camera 134 or a scanner (not shown). Images may also be input directly from the digital camera 134 via a camera docking port 136 connected to the microprocessor-based unit 112 or directly from the digital camera 134 via a cable connection 138 to the microprocessor-based unit 112 or via a wireless connection 140 to the microprocessor-based unit 112.

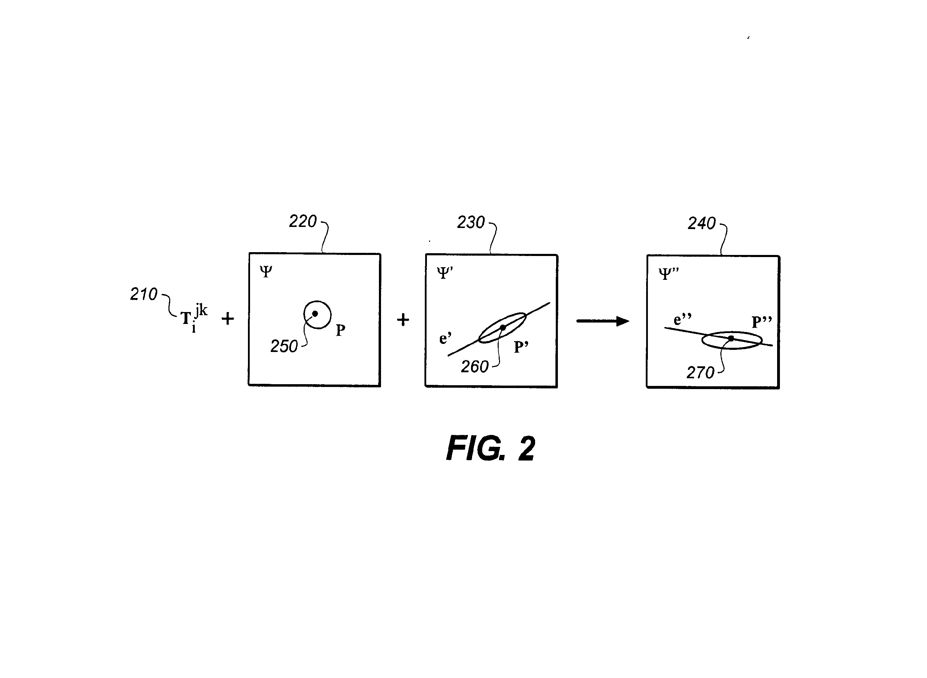

Turning now to Fig. 2, the method of the present invention will be outlined. Let $p=(x,y,1)$, $p'=(x',y',1)$ and $p''=(x'',y'',1)$ denote the perspective projection (homogeneous coordinate) of the same spatial point on three image frames, ψ 220, ψ' 230 and ψ'' 240. Given the trifocal tensor $T$ 210, point p 250 and point p' 260 in the first two frames, the corresponding point p" 270 in frame ψ" can be predicted by trifocal transfer, as shown in the following.

By the choice of two horizontal and vertical lines in frames ψ' and ψ" passing through p' and p" respectively, the geometric constraint of trilinearity can be expanded to four independent trilinear equations 300,

$$x''T_i^{13}p^i - x''x'T_i^{33}p^i + x'T_i^{31}p^i - T_i^{11}p^i = 0$$

$$y''T_i^{13}p^i - y''x'T_i^{33}p^i + x'T_i^{32}p^i - T_i^{12}p^i = 0$$

$$x''T_i^{23}p^i - x''y'T_i^{33}p^i + y'T_i^{31}p^i - T_i^{21}p^i = 0$$

$$y''T_i^{23}p^i - y''y'T_i^{33}p^i + y'T_i^{32}p^i - T_i^{22}p^i = 0$$

The indices repeated in the contravariant (superscript) and covariant (subscript) positions in indicate summation over the range of the index (contraction). For example,

$$T_i^{11}p^i = T_1^{11}x + T_2^{11}y + T_3^{11}$$ .

Let vectors

$$\mathbf{r} = [x, y]^T$$ ,

$$\mathbf{s} = [x', y']^T$$ ,

and

$$\mathbf{u} = [x'', y'']^T$$

denote the points in three frames, and let

$$\mathbf{t} = [T_1^{11}, \ldots, T_i^{jk}, \ldots, T_3^{33}]^T$$

denote the vector representation of a trifocal tensor. The trilinear equations can be written as **f(u,z) =0,** where **f** is a vector of four trilinear functions and z= [r$^T$, s$^T$, t$^T$]$^T$ is a vector of point correspondence and trifocal tensor. The relation between **u** and **z** can actually be written as a linear system **Au=b**, where

$$\mathbf{A} = \begin{bmatrix} T_i^{13}p^i - x'T_i^{33}p^i & 0 \\ 0 & T_i^{13}p^i - x'T_i^{33}p^i \\ T_i^{23}p^i - y'T_i^{33}p^i & 0 \\ 0 & T_i^{23}p^i - y'T_i^{33}p^i \end{bmatrix}$$

$$\mathbf{b} = - \begin{bmatrix} x'T_i^{31}p^i - T_i^{11}p^i \\ x'T_i^{32}p^i - T_i^{12}p^i \\ y'T_i^{31}p^i - T_i^{21}p^i \\ y'T_i^{32}p^i - T_i^{22}p^i \end{bmatrix}.$$

There are four equations 300 for two variable (x",y"), and the solution to the over-determined system is

$$u = (A^T A)^{-1} A^T b.$$

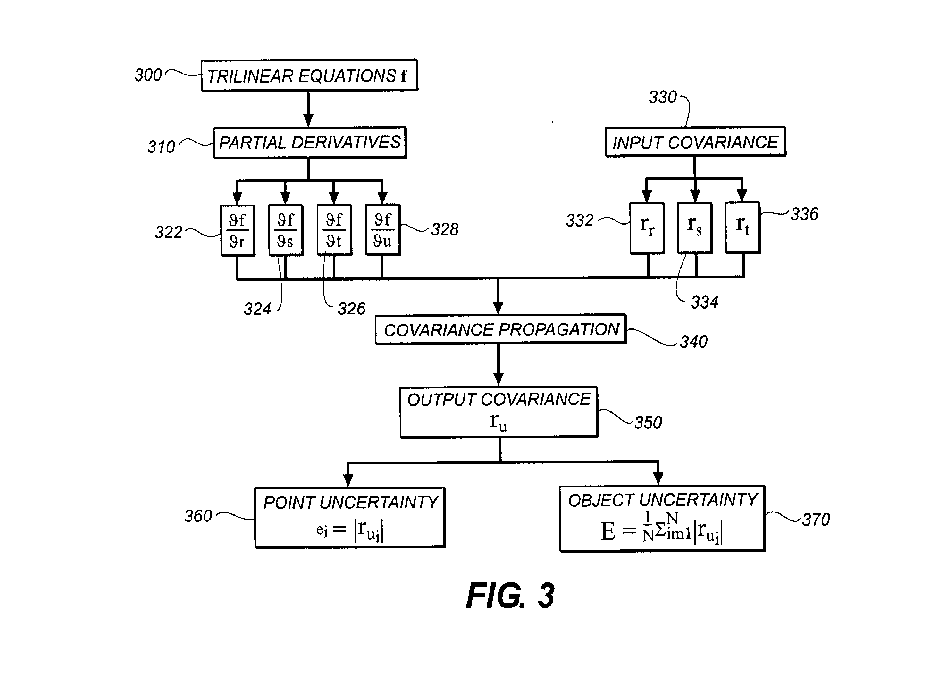

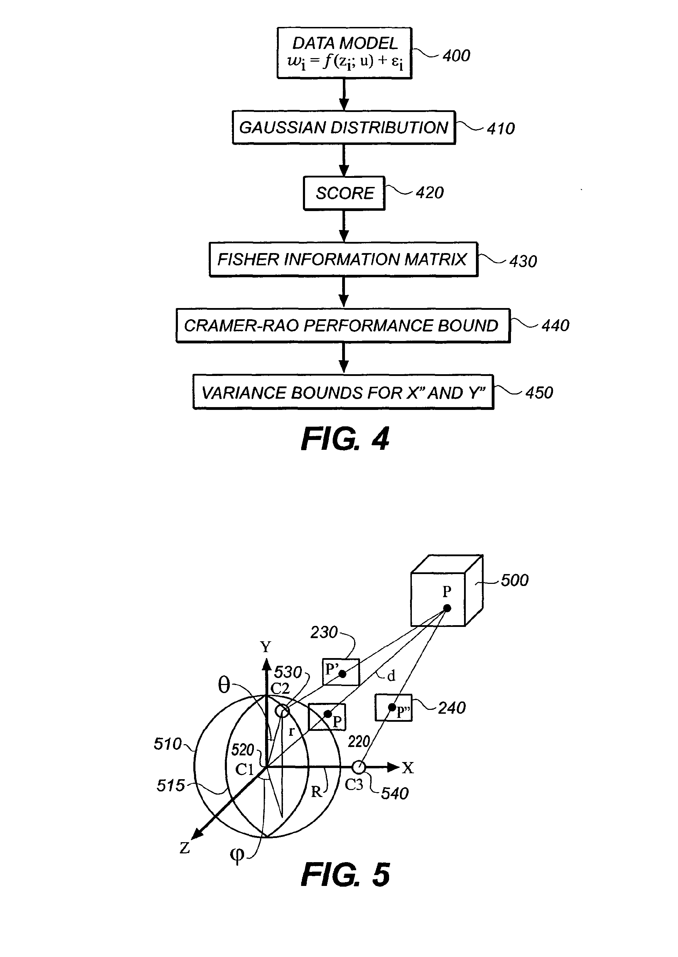

In addition to the solution of trifocal transfer, the robustness and error sensitivity issues are of great interest as well in engineering applications. The point uncertainty associated with point p" 270 can be predicted from those associated with point p 250, point p' 260 and the trifocal tensor 210. In Fig. 2, the point uncertainty is depicted as 2-D ellipses showing the magnitude and the orientation of the uncertainty. Next, in Fig. 3 and Fig. 4, the details of two approaches will be presented to determine the uncertainty of trifocal transfer.

Fig. 3 outlines the closed-form analysis of the first order perturbation and covariance propagation for trifocal transfer. The results are valid for small perturbation and give a general idea of the perturbation on (x",y") subject to noise in point correspondence and trifocal tensor. Starting from the trilinear equations (300) **f(u,z)=0**, we take partial derivatives 310 of **f** with respect to the variables **r, s, t,** and **u**. The explicit representation of the partial derivatives will be given as follows and can be calculated from the known entities.

The partial derivative of f with respect to point p in frame $\psi$ 322 is

$$\frac{\partial \mathbf{f}}{\partial \mathbf{r}} = \begin{bmatrix} x''T_i^{13} - x''x'T_i^{33} + x'T_i^{31} - T_i^{11} & x''T_i^{13} - x''x'T_i^{33} + x'T_i^{31} - T_i^{11} \\ y''T_i^{13} - y''x'T_i^{33} + x'T_i^{32} - T_i^{12} & y''T_i^{13} - y''x'T_i^{33} + x'T_i^{32} - T_i^{12} \\ x''T_i^{23} - x''y'T_i^{33} + y'T_i^{31} - T_i^{21} & x''T_i^{23} - x'y'T_i^{33} + y'T_i^{31} - T_i^{21} \\ y''T_i^{23} - y''y'T_i^{33} + y'T_i^{32} - T_i^{22} & y''T_i^{23} - y''y'T_i^{33} + y'T_i^{32} - T_i^{22} \end{bmatrix}^T ,$$

The partial derivative of **f** with respect to point p' in frame $\psi'$ 324 is

$$\frac{\partial \mathbf{f}}{\partial \mathbf{s}} = \begin{bmatrix} -x''T_i^{33}p^i + T_i^{31}p^i & -y''T_i^{33}p^i + T_i^{32}p^i & 0 & 0 \\ 0 & 0 & -x''T_i^{33}p^i + T_i^{31}p^i & -y''T_i^{33}p^i + T_i^{32}p^i \end{bmatrix}$$

The partial derivative of **f** with respect to point p" in frame $\psi''$ 328 is

$$\frac{\partial \mathbf{f}}{\partial \mathbf{u}} = \begin{bmatrix} T_i^{13}p^i - x'T_i^{33}p^i & 0 & T_i^{23}p^i - y'T_i^{33}p^i & 0 \\ 0 & T_i^{13}p^i - x'T_i^{33}p^i & 0 & T_i^{23}p^i - y'T_i^{33}p^i \end{bmatrix}$$

And the partial derivative of f with respect to point trifocal tensor 326 is

$$\frac{\partial f}{\partial t} = \begin{bmatrix} -x & 0 & 0 & 0 \\ -y & 0 & 0 & 0 \\ -1 & 0 & 0 & 0 \\ 0 & 0 & -x & 0 \\ 0 & 0 & -y & 0 \\ 0 & 0 & -1 & 0 \\ x'x & 0 & y'x & 0 \\ x'y & 0 & y'y & 0 \\ x' & 0 & y' & 0 \\ 0 & -x & 0 & 0 \\ 0 & -y & 0 & 0 \\ 0 & -1 & 0 & 0 \\ 0 & 0 & 0 & -x \\ 0 & 0 & 0 & -y \\ 0 & 0 & 0 & -1 \\ 0 & x'x & 0 & y'x \\ 0 & x'y & 0 & y'y \\ 0 & x' & 0 & y' \\ x''x & y''x & 0 & 0 \\ x''y & y''y & 0 & 0 \\ x'' & y'' & 0 & 0 \\ 0 & 0 & x''x & y''x \\ 0 & 0 & x''y & y''y \\ 0 & 0 & x'' & y'' \\ -x''x'x & -y''x'x & -x''y'x & -y''y'x \\ -x''x'y & -y''x'y & -x''y'y & -y''y'y \\ -x''x' & -y''x' & -x''y' & -y''y' \end{bmatrix} .$$

Meanwhile, the input covariances 330 are derived in Fig. 3 for the point correspondence and trifocal tensor as measures of uncertainties. In general, the covariance of the input vector $\Gamma_s$ is a 31 x31 matrix (2 for (x,y), 2 for (x', y') and 27 for T). When the cross correlation between point correspondence and trifocal tensor is ignored, $\Gamma_s$ can be written as a block diagonal matrix

$$\Gamma_s = \mathbf{diag}\{\Gamma_r, \Gamma_s, \Gamma_t\} .$$

point covariances $\Gamma_r$ 332 and $\Gamma_s$ 334 in the first two frames can be estimated directly from image intensity (with an unknown scale factor) as the inverse of the Hessian matrix. More specifically, covariance in the first image 332 is

$$\Gamma_r = k \begin{bmatrix} \frac{\partial^2 I(x,y)}{\partial x^2} & \frac{\partial^2 I(x,y)}{\partial x \partial y} \\ \frac{\partial^2 I(x,y)}{\partial y \partial x} & \frac{\partial^2 I(x,y)}{\partial y^2} \end{bmatrix}^{-1}$$

where k is a scale factor and the matrix elements are the second-order partial derivatives of intensity I(x,y) along x and y axes. The Hessian matrix indicates the curvature of the intensity surface around a feature point. Covariance $\Gamma_s$ 334 can be estimated similarly in the second frame.

The covariance of trifocal transfer 336 is a function of the camera parameters. Let the projection matrices of the three cameras be

$$P_1 = [I|0]_{3\times 4}, P_2 = [A|a_4]_{3\times 4}, P_3 = [B|b_4]_{3\times 4}$$

If there is a linear relation **t=DC** between vector **t** of the trifocal tensor and vector C of all the distinctive camera parameters, where

$$T_i^{jk} = a_i^j b_4^k - a_4^j b_i^k ,$$

then covariance $\Gamma_t$ 336 can be computed from the covariance of camera parameters $\Gamma_c$ by linear matrix computation $\Gamma_t = D\Gamma_c D^T$. In practice, the relation is nonlinear for unconstrained camera motion and the availability of $\Gamma_t$ is an issue.

All the partial derivatives and input covariances are fed to the covariance propagation module 340. In this module, the first order uncertainty of the input is propagated to the output, finding the impact of the input perturbation $\Delta z$ on the output $\Delta u$

$$\Delta_u = -[(\frac{\partial f}{\partial u})(\frac{\partial f}{\partial u})^T]^{-1}(\frac{\partial f}{\partial u})(\frac{\partial f}{\partial z})^T \Delta_z = -Q\Delta_z$$

Accordingly, the first order covariance of (x",y") 350 becomes

$$\Gamma_u = E\{\Delta_u \Delta_u^T\} = Q\Gamma_z Q^T.$$

When the cross correlation between point correspondence and trifocal tensor is ignored, it is further simplified as

$$\Gamma_u = (f_u f_u^T)^{-1} f_u (f_r^T \Gamma_r f_r + f_s^T \Gamma_s f_s + f_t^T \Gamma_t f_t) f_u^T (f_u f_u^T)^{-1}$$

where

$$f_u = \frac{\partial f}{\partial u}, \; f_r = \frac{\partial f}{\partial r}, \; f_s = \frac{\partial f}{\partial s}, \; \text{and} \; f_t = \frac{\partial f}{\partial t}.$$

are partial derivatives. It is clear that the uncertainty of (x",y") is a function of that on (x,y), (x',y') and **T**. In practice, the observation/estimation are used instead of the ground truth for computational purpose.

From the output covariance, we can derive quantitative error measures for a single point

$$c_i = |\Gamma_{u_i}| = \text{trace}(\Gamma_{u_i}),$$

360 or the whole object

$$E = \frac{1}{N} \sum_{i=1}^{N} |\Gamma_{u_i}|$$

370 under a specific camera configuration. The point covariance 360 indicates which points are more sensitive to the input perturbation, and could lead to potential improvement. By comparing object uncertainty 370 at different camera and scene configurations, we can identify which is the optimal configuration to achieve minimal transfer uncertainty in frame $\psi$".

Refer now to Fig. 4 for an alternative approach to find the best achievable performance bound, known as the Cramer-Rao performance bound, for trifocal transfer at a given noise level. We can not expect performance better than the predicted bound given the amount of input noise. The task can be carried out by customizing the general theory of statistical optimization to the specific task of trifocal transfer.

Let (x",y") be the parameters to be estimated from a collection of data $(z_1, z_2, ..., z_N)$ available from repeated statistical tests on a model

$$w_i = f(z_i; u) + \varepsilon_i,$$

1 400, where i=1,...,N, and assume $\varepsilon$ is sampled from a Gaussian distribution $(0, \sigma^2)$ 410 with the probability density of

$$p(w_1 \ldots w_N; u) = \frac{1}{(\sqrt{2\pi}\sigma)^N} \exp\left\{-\frac{\sum_{i=1}^{N}(w_i - f(z_i; u))^2}{2\sigma^2}\right\}.$$

The score 420 by definition is

$$1 = \frac{\partial \log p}{\partial \mathbf{u}} = \frac{1}{\sigma^2} \sum_{i=1}^{N} \varepsilon_i \left[ \frac{\partial f}{\partial \mathbf{u}} \right]_i$$

which leads to the Fisher information matrix 430

$$\mathbf{J} = \frac{1}{\sigma^2} \sum_{i=1}^{N} \left[ \frac{\partial \mathbf{f}}{\partial \mathbf{u}} \right]_i \left[ \frac{\partial \mathbf{f}}{\partial \mathbf{u}} \right]_i^T$$

The Cramer-Rao performance bound 440 then has the form of

$$\Gamma_u > J^{-1}.$$

The output covariance 350 of any unbiased estimator can not be smaller than the inverse of the Fisher information matrix.

Furthermore, the variances of the x and y components 450 in closed-form can be derived as

$$\Gamma_{x'} \geq \sigma^2 / \zeta \quad \text{and} \quad \Gamma_{y'} \geq \sigma^2 / \zeta,$$

$$\zeta = \sum_{j=1}^{N} [(T_i^{13} p^i - x' T_i^{33} p^i)_j^2 + (T_i^{23} p^i - y' T_i^{33} p^i)_j^2].$$

A combination of the covariance propagation in Fig. 3 and the performance low bound in Fig. 4 gives better results.

There are several noisy configurations in practice, depending on the number of involved noisy and noise-free variables. The different configurations only change the structure of vector z, and the analysis remains the same.

Having presented two methods for error analysis of trifocal transfer in Fig. 3 and Fig. 4, we now turn to the following specific embodiments to show how to use the derived error sensitivity measures.

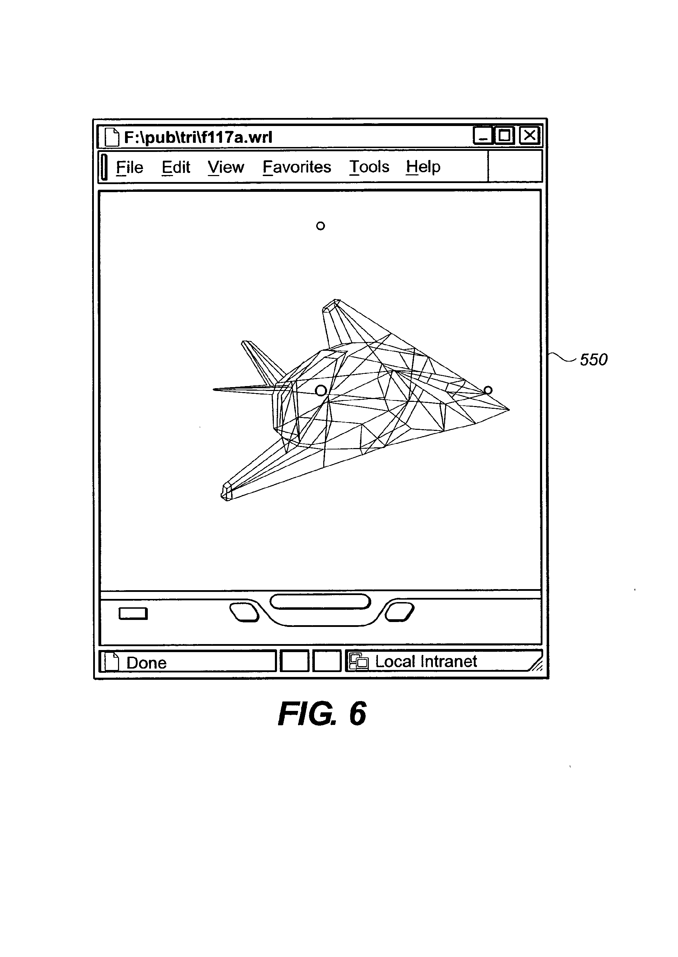

Fig. 5 demonstrates how to use the error analysis results to arrange cameras such that the overall uncertainty of trifocal transfer is minimized. Three images (220, 230 and 240) of an object 500 in cube $[-1,1]^3$ are taken by several cameras under perspective projection. Let the three cameras have the same intrinsic parameters. The center of the world coordinate system is chosen at the optical center of the camera C1 520. The optical center of the camera C3 540 is aligned on the X axis, which can be done by rotation of the coordinate system if necessary. The distances from the center of C1 to the centers of C3 and the cube 500 are R and d, respectively. Another camera C2 530 is introduced for the trifocal transfer from point p in frame $\psi$ 220 (taken by camera C1) to p" in frame $\psi$" 240 (taken by camera C3). If point correspondence and the locations of cameras C2 and C3 are subject to noise, where should we place camera C2 so that the transferred points in frame $\psi$" have the minimum uncertainty? The following results are tested on a 3-D plane model 550 with 141 nodes as shown in VRML in Fig. 6.

When there is only translational motion and the camera C2 is placed on a circle 515 in the YZ plane with radius r, the parameter vector of the cameras C2 and C3, c= $[a_4^1, a_4^2, a_4^3, b_4^1, b_4^2, b_4^3]^T$ has mean C = [0, -r cos $\theta$, -r sin$\theta$, -R,0,0] and covariance

$$\Gamma_c = \sigma_c^2 I_{6 \times 6},$$

i.e., and the centers of C2 and C3 are subject to the same identical and independent Gaussian noise $(0, \sigma_c^2)$. If points p and p' are also corrupted by Gaussian noise with covariances of $\Gamma_r = \sigma_r^2 I_{2 \times 2}$ and $\Gamma_s = \sigma_s^2 I_{2 \times 2}$, the covariance of point p" can be predicted by linear matrix computation. With the choice of parameters R=I, d=5R, r=R, and

$$\sigma_r = \sigma_s = \sigma_c = 0.05R,$$

the overall transfer uncertainty

$$E_\theta = \sum_i \Gamma_{u_i}^\theta$$

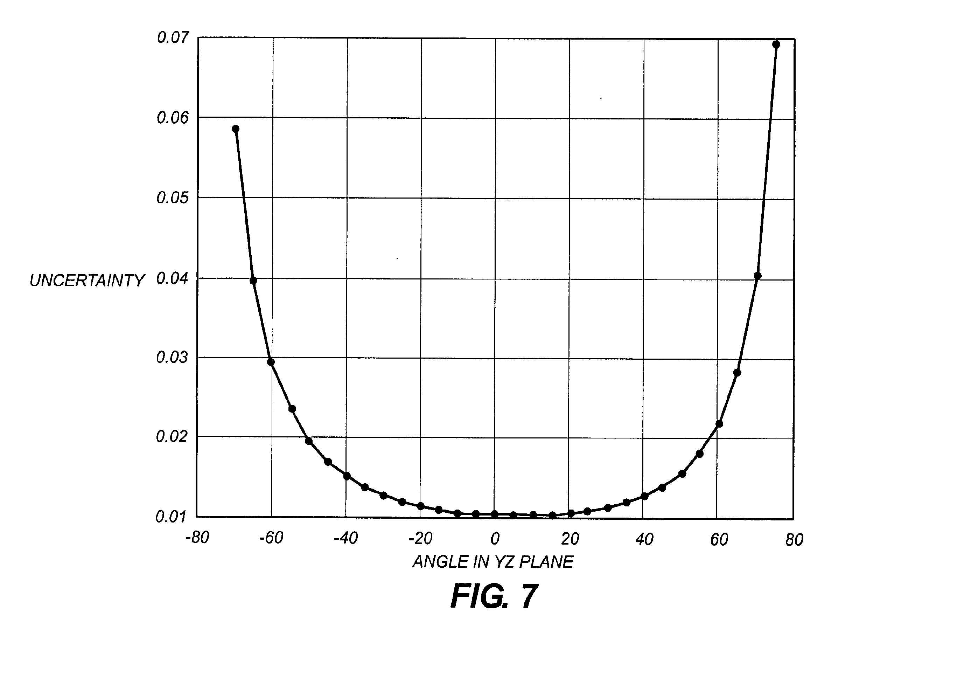

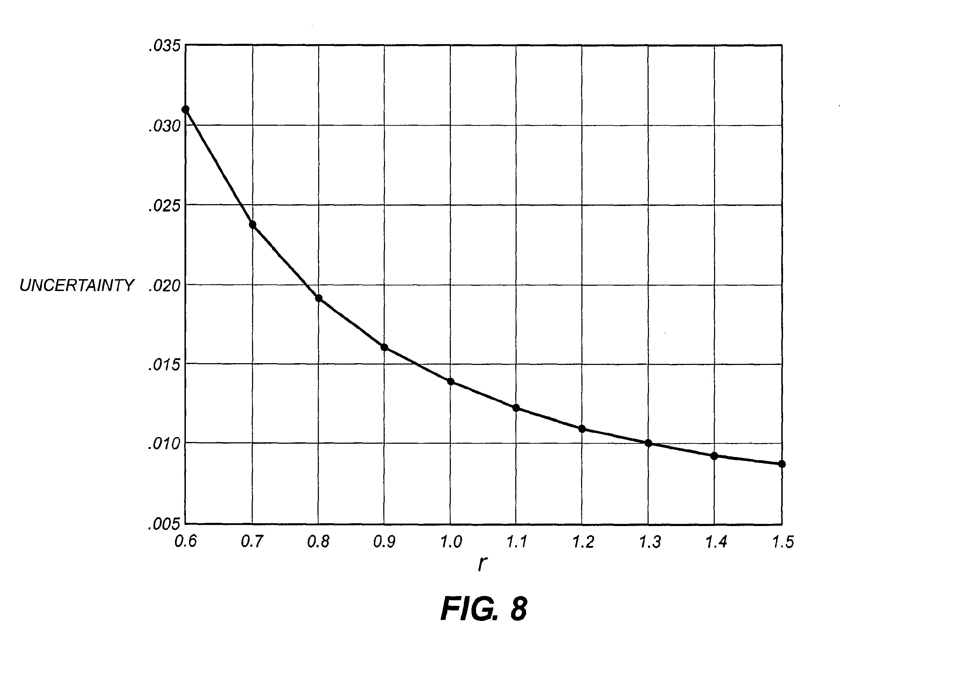

with $-70° \leq 0 \leq 75°$ is evaluated and plotted in Fig. 7. The minimal uncertainty is reached at θmin = 6°, by placing the center of C2 somewhere close to (0, r, 0). As shown in Fig. 8, the uncertainty of trifocal transfer drops as r increases (0 = π/4). Given the same correspondence precision in frames ψ and ψ', the larger the baseline between C1 and C2, the smaller the uncertainty of trifocal transfer in frame ψ". Therefore the question about the location of camera C2 can be answered quantitatively by using the error analysis results, even though the optimal location varies with the choices of scene structure and camera configurations.

If the cameras undergo both translational and rotation motion such that they always point to the cube center (0,0,-d), the camera projection matrix becomes

$$\mathbf{P} = \begin{bmatrix} \cos\beta & -\sin\beta\sin\alpha & \sin\beta\cos\alpha & -d\sin\beta\cos\alpha \\ 0 & \cos\alpha & \sin\alpha & -d\sin\alpha \\ -\sin\beta & -\cos\beta\sin\alpha & \cos\beta\cos\alpha & -d\cos\beta\cos\alpha + d \end{bmatrix}$$

where tanα=y/d, tanβ=x/d. Camera C3 is again placed at (R,0,0), and C2 is placed on a circle 515 in XY plane in Fig. 5. Using the parameters of

$$\Gamma_s = \sigma_s^2 \mathbf{I}_{2\times 2},$$

$$\Gamma_r = 0 \text{ and } \Gamma_t = 0,$$

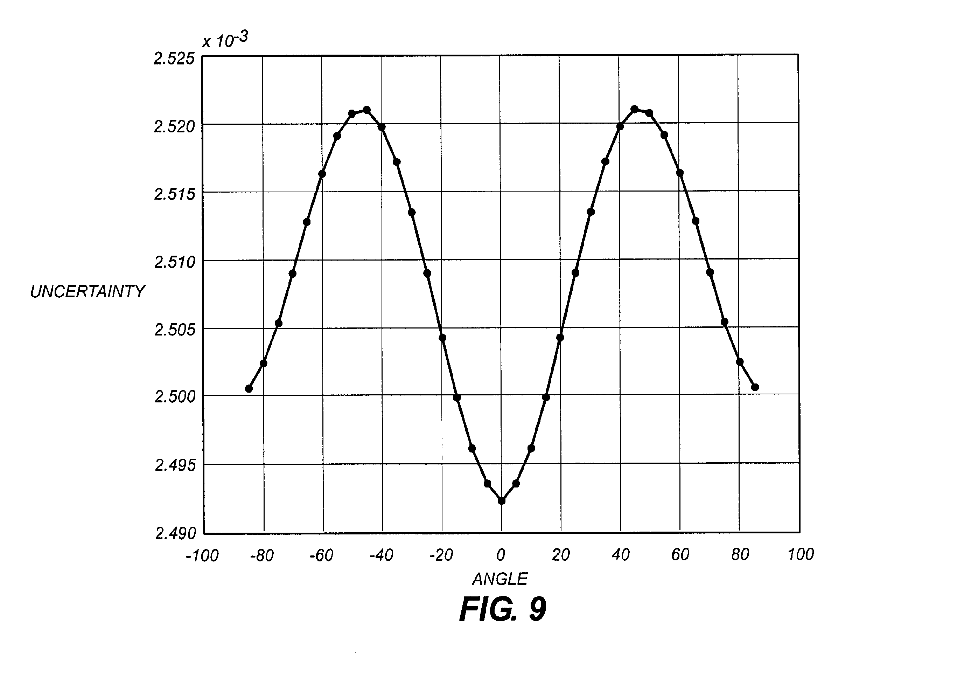

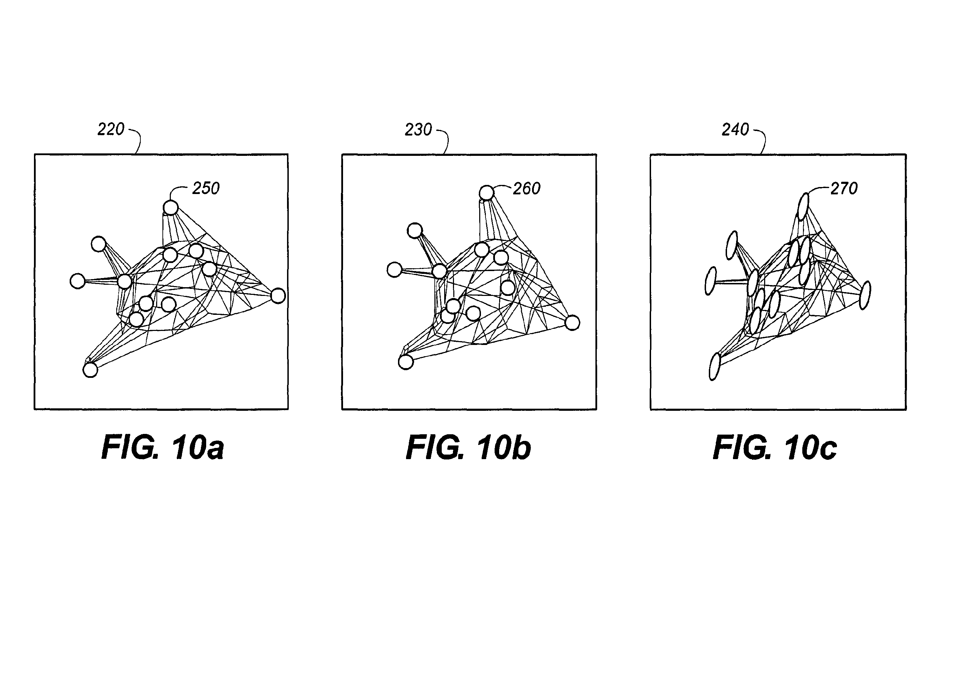

the uncertainty curve of trifocal transfer is shown in Fig. 9, where the minimal uncertainty is reached at θ=0 by placing C2 at (0,r,0) on Y axis. The three perspective projections of the 3-D plane model and the noise associated with 12 selected nodes are depicted in Fig. 10, where camera C2 is placed at θ=π/3 and r=R. Given the trifocal tensor and the correspondences of mesh nodes in (a) and (b), the 2-D mesh model of the plane in (c) can be predicted by trifocal transfer. Using the error analysis results, we can further predict the uncertainty of the mesh nodes in (c) from the covariances of point correspondences in (a) and (b). The shape and orientation of the error distribution (ellipses) in (c) change with θ, as camera C2 moves on the circle.

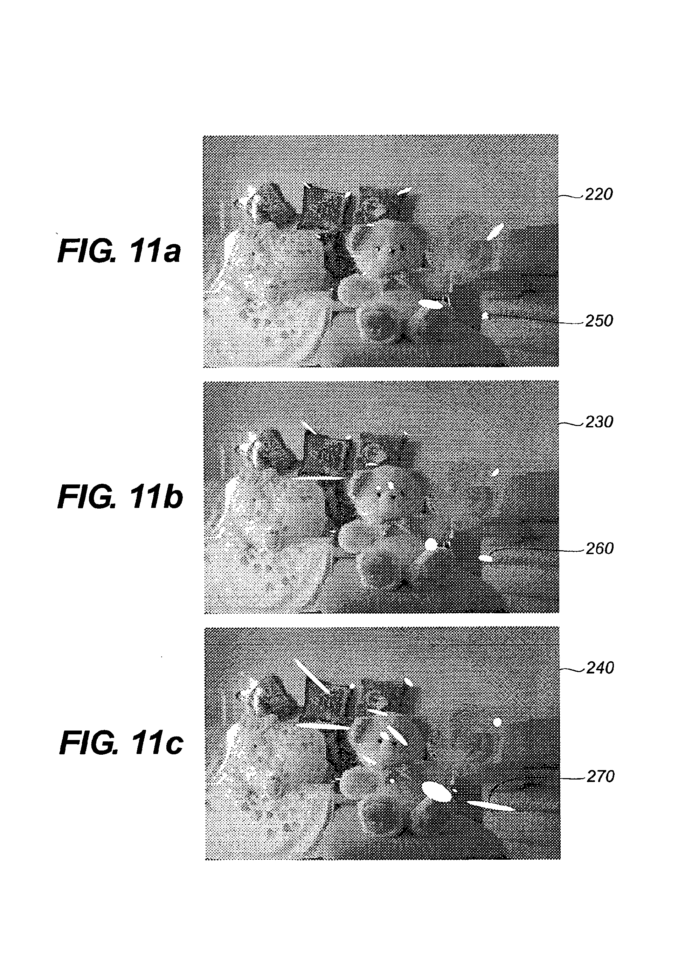

In Fig. 11, the trifocal transfer and the associated error uncertainty on real imagery are demonstrated. Three images (220, 230 and 240) of a static scene are taken by a moving camera, and the trifocal tensor is recovered by a random sampling scheme (RANSAC). The position of p" and the associated error in Fig. 11(c) can be predicted from those in (a) and (b) by trifocal transfer and the error analysis. In the figure, 15 feature points are detected in (a) then tracked to (b), and the corresponding points and uncertainty in frame ψ" are shown in (c). It provides a visualization tool for the error distribution of trifocal transfer (both magnitude and orientation).

In summary, Trifocal transfer finds point/line correspondence across three images of a rigid scene under perspective projection based on the geometric constraint of trilinearity, and is useful for applications such as image-based rendering, virtual navigation, motion estimation and compensation. The invention discloses methods to determine the error sensitivities associated with trifocal transfer, *i.e.* how the uncertainty of point correspondence in the first two frames and the trifocal tensor affects the corresponding point in the third frame, and uses the error analysis results for camera planning, system performance evaluation and trifocal transfer on real imagery. Closed-form analysis is presented for the first order covariance propagation as well as the Cramer-Rao performance bound. The quantitative analysis can lead to better understanding of the system performance in engineering applications.

**Claims**

1. In a method for determining the perspective projection of a corresponding spatial point in three image frames, given the geometric constraint of trilinearity as defined by a set of trilinear equations, and where trifocal transfer is used to predict a corresponding point in the third frame from a trifocal tensor and points in the first two frames, the improvement comprising the step of predicting the uncertainty of trifocal transfer in the third image subject to the uncertainties affecting the corresponding points in the first two images of a rigid scene under perspective projection using the trifocal tensor.

2. The method of claim 1 wherein the step of predicting the uncertainty is based on analysis of first order perturbation and covariance propagation and comprises the steps of:

   a) deriving partial derivatives of the trilinear equations with respect to the points in the three images and the trifocal tensor;
   b) deriving input covariances of the points in the first two images and the trifocal tensor;
   c) propagating the first order input perturbation and covariances to those on the corresponding point in the third image; and
   d) determining quantitative error measures for the uncertainties of a single point and an overall object.

3. The method of claim 1 wherein the step of predicting the uncertainty is based on a Cramer-Rao performance bound approach, comprising the steps of:

   a) building a data model for statistical testing;
   b) carrying out repeated statistical tests on the data model and drawing samples from a Gaussian distribution;
   c) deriving a score and a Fisher information matrix;
   d) deriving a Cramer-Rao performance bound from the Fisher information matrix; and
   e) using the Cramer-Rao performance bound to identify variance bounds for x" and y" in the third image.

4. The method of claim 1 wherein the method is used for camera planning such that the uncertainty of trifocal transfer is minimized.

5. The method of claim 1 wherein the method is used to identify which points and parts of an image are more sensitive to input perturbation.

6. The method of claim 4 wherein the method is used to determine the most suitable scene and camera configurations for optimal trifocal transfer.

7. The method of claim 4 wherein the method is used to determine how far apart cameras should be placed to keep the uncertainty of trifocal transfer under a certain level.

8. The method of claim 1 wherein the uncertainty of the points is used as part of a characteristic of an object.

9. The method of claim 1 wherein the uncertainties are represented as ellipses indicating strength and orientation.

FIG. 1

**FIG. 2**

*FIG. 3*

DATA MODEL
$w_i = f(z_i; u) + \varepsilon_i$ ⟵ 400

↓

GAUSSIAN DISTRIBUTION ⟵ 410

↓

SCORE ⟵ 420

↓

FISHER INFORMATION MATRIX ⟵ 430

↓

CRAMER-RAO PERFORMANCE BOUND ⟵ 440

↓

VARIANCE BOUNDS FOR X" AND Y" ⟵ 450

## FIG. 4

## FIG. 5

**FIG. 6**

FIG. 7

EP 1 418 545 A2

*FIG. 8*

EP 1 418 545 A2

FIG. 9

**FIG. 10a**  **FIG. 10b**  **FIG. 10c**

EP 1 418 545 A2

*FIG. 11a*

*FIG. 11b*

*FIG. 11c*